(19) **Europäisches Patentamt / European Patent Office / Office européen des brevets**

(11) **EP 1 909 405 B1**

(12) **EUROPEAN PATENT SPECIFICATION**

(45) Date of publication and mention
of the grant of the patent:
**25.11.2009 Bulletin 2009/48**

(51) Int Cl.:
*H04B 3/32* (2006.01)    *H04L 5/02* (2006.01)
*H04L 27/26* (2006.01)    *H04B 3/04* (2006.01)

(21) Application number: **07019190.3**

(22) Date of filing: **28.09.2007**

(54) **Multi-carrier transmission system**

Mehrträger-Übertragungssystem

Système de transmission multiporteur

(84) Designated Contracting States:
**DE FR GB IT**

(30) Priority: **02.10.2006 JP 2006270883**

(43) Date of publication of application:
**09.04.2008 Bulletin 2008/15**

(73) Proprietor: **NEC Corporation**
**Minato-ku**
**Tokyo (JP)**

(72) Inventors:
• **Okamura, Yusaku**
**Tokyo (JP)**

• **Matsuda, Eiichi**
**Tokyo (JP)**
• **Sasaki, Susumu**
**c/o NEC Communication Systems Ltd.,**
**Tokyo (JP)**

(74) Representative: **Glawe, Delfs, Moll**
**Patent- und Rechtsanwälte**
**Postfach 26 01 62**
**80058 München (DE)**

(56) References cited:
**EP-A- 1 672 809**    **JP-A- 2006 180 331**
**US-B1- 6 359 906**

**Description**

This application is based upon and claims the benefit of priority from Japanese patent application No. 2006-270883, filed on October 2, 2006.

BACKGROUND OF THE INVENTION

Field of the Invention

The present invention relates to a transmission output control apparatus, a multi-carrier transmission system, a transmission output control method, and a transmission output control program which are applied to an xDSL (x Digital Subscriber Line) (x is a generic name of A, H, S, V, or the like) which performs data transmission at a high rate of several M bits/second through a metallic cable such as a telephone line.

Description of Related Art

The xDSL uses a metallic cable such as a telephone line to make it possible to perform data transmission at a high rate of several M bits/second. An ADSL (Asymmetric Digital Subscriber Line), an SDSL (Symmetric Digital Subscriber Line), an HDSL (High bit-rate Digital Subscriber Line), a VDSL (Very high bit-rate Digital Subscriber Line), and the like are known as the xDSLs, and discriminated from each other by transmission rates, symmetry/asymmetry of rates, and the like. The DSLs are generically named as xDSLs.

The xDSL is called a best-effort service. The transmission rate of the xDSL varies depending on environmental conditions such as a transmission distance of a communication line and noise. In general, under the environmental condition that a transmission distance of a communication line is short and noise is low, the transmission rate increases. Under the environmental condition that the transmission distance of the communication line is long and noise is high, the transmission rate decreases.

The xDSL employs a DMT (Discrete Multi Tone) scheme as a modulation scheme. In this scheme, an initialization training is performed before a modem starts communication, a transmission distance of a communication line and an SNR (Single to Noise Ratio) of each carrier are measured, a bit rate arranged in each carrier is calculated on the basis of the SNR of the corresponding carrier, and a final transmission rate is determined on the basis of the calculated bit rate.

For example, an SNR of a carrier number: i (i is an arbitrary integer) is represented by SNRi. Then a total sum of bit rates arranged in carriers: Totalrate, wherein the carrier numbers i of which are mth to nth, is calculated by the following (equation 1). A final transmission rate is determined on the basis of the calculated total sum of bit rates: Totalrate.

**[Equation 1]**

$$Totalrate = S \times \sum_{i=m}^{n} \log_2\left(1 + \frac{SNR_i}{\Gamma}\right)$$

Reference symbol S denotes a symbol rate. In an ADSL conforming to G.992.1, the symbol rate is given as 4 kHz. Reference symbol $\Gamma$ is an effective SNR gap. When an error rate is set at $10^{-7}$, $\Gamma = 9.75$ dB.

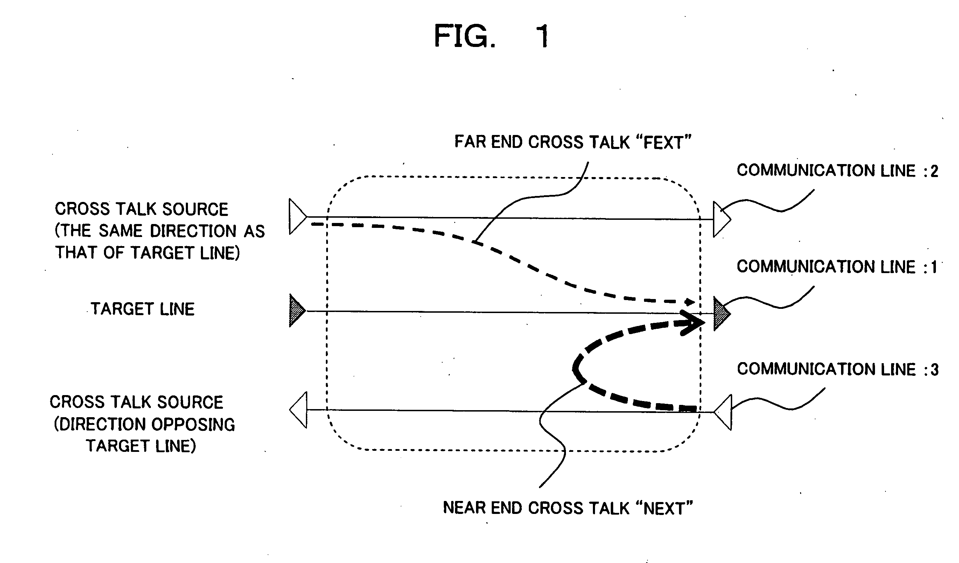

The most dominated noise in the xDSL is a cross talk from another line. As shown in FIG. 1, cross talks includes a near end cross talk "NEXT" (a cross talk source and a cross talk receiver have opposite directions) and a far end cross talk "FEXT" (s cross talk source and a cross talk receiver having the same direction). In general, the far end cross talk "FEXT" has an effect smaller than that of the near end cross talk "NEXT". The near end cross talk "NEXT" and the far end cross talk "FEXT" will be described below in detail with reference to FIG. 1.

When a communication line (1) shown in FIG. 1 is assumed to be an object to be measured, a cross talk generated by a communication line (2) as a "cross talk source" in which a signal flows in the same direction of the communication line (1) paid attention as an object to be measured is a far end cross talk "FEXT". Since a signal to be originally transmitted is attenuated according to a transmission distance, an amount of cross talk of the far end cross talk "FEXT" is also relatively attenuated depending on a transmission distance.

A cross talk generated by a communication line (3) as "cross talk source" in which a signal flows in a opposing direction of the communication line (1) paid attention as an object to be measured is a near end cross talk "NEXT". A signal to be originally transmitted is attenuated according to a transmission distance, whereas the near end cross talk "NEXT" has a large amount of cross talk at a destination of the signal to be originally transmitted. For this reason, an effect of the near end cross talk "NEXT" is more conspicuous than that of the far end cross talk "FEXT".

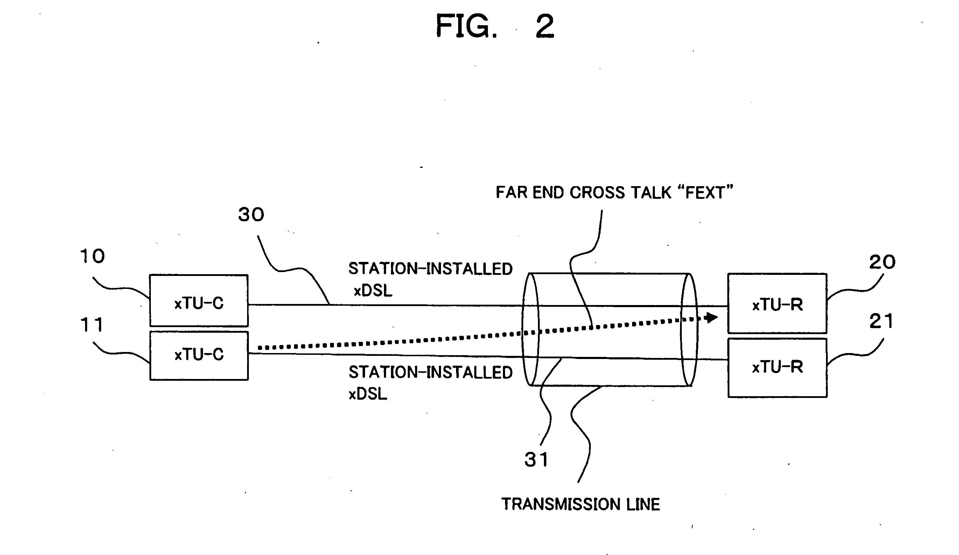

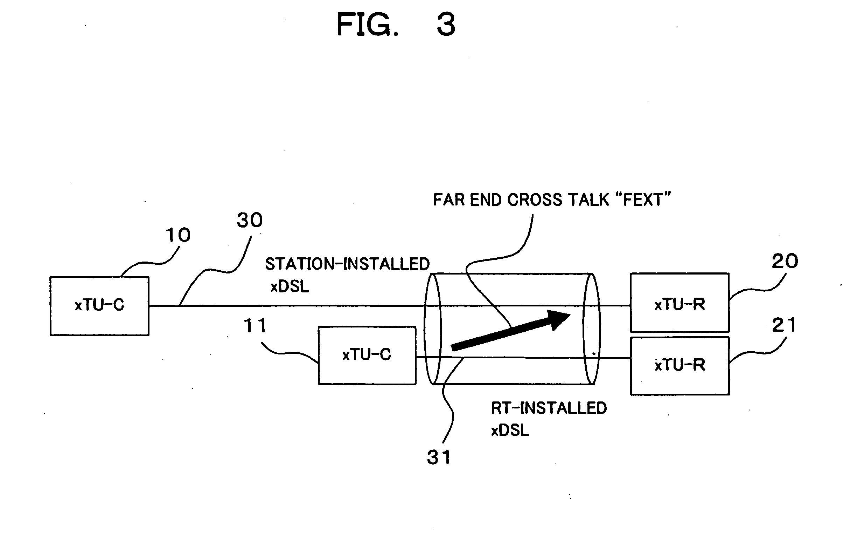

In a case of a conventional xDSL, as shown in FIG. 2, station-installed xTU-Cs (XDSL Termination Unit-Center side) (10 and 11) installed in a station side are present at the same position. However, at present, as shown in FIG. 3, the study of an xDSL installed in a remote terminal (RT) is advanced.

In a case of the xDSL installed in the remote terminal (RT), as shown in FIG. 3, positions of the xTU-Cs (10 and 11) installed on the station side are different from each other. For this reason, a far end cross talk "FEXT" of the xTU-C (11) of the RT-installed xDSL is consequently generated on the way of a communication line (30) of the xTU-C (10) of an existing station-installed xDSL. As a result, the far end cross talk "FEXT" generated from the xTU-C (11) of the RT-installed xDSL considerably influences an xTU-R (XDSL Termination Unit-Remote side) (20) of existing station-installed xDSLs (10 and 20) adjacent to the RT-installed xDSLs (11 and 21).

This is because, when a signal of a high transmission output level is transmitted from the xTU-C (11) of the RT-installed xDSL under a condition wherein a signal transmitted from the xTU-C (10) of the station-installed xDSL is attenuated depending on a transmission distance of the communication line (30), a cross talk serving as a very large far end cross talk "FEXT" intercepts the xTU-R (20) of the existing station-installed xDSL.

For this reason, it is desirable to reduce an effect by the far end cross talk "FEXT" generated from the xTU-C (11) of the RT-installed xDSL, and to avoid a reduction in transmission rate of an adjacent station-installed xDSL.

As a method of reducing an effect by the far end cross talk "FEXT" of the RT-installed xDSL above described, a method of decreasing a transmission output level of a signal transmitted from the xTU-C (11) of the RT-installed xDSL may be used.

For example, in ITU-T recommended G.993.1 which is a recommendation of a VDSL, in order to reduce interference with an adjacent station-installed ADSL, a function which decreases a transmission output of 1.1 MHz or less of the station-installed VDSL is regulated.

It is proposed that transmission outputs in frequency bands overlapping in an operation band of a station-installed VDSL and an operation band of a station-installed ADSL are suppressed to avoid a reduction of transmission rate of the station-installed ADSL.

However, even though the transmission outputs of the signals in the frequency bands overlapping in the operation band of the station-installed VDSL and the station-installed ADSL are suppressed, when a noise is generated in a high-frequency band higher than the operation band of the station-installed ADSL, a phenomenon in which a folding noise or the like is generated against the station-installed ADSL to deteriorate an SNR of an ADSL signal of the station-installed ADSL occurs. Consequently, it is found that a transmission rate of the station-installed ADSL is reduced.

Document EP-A-1672809 discloses a method and apparatus for dealing with the cross-talk generated in mixed deployment (ADSL and VDSL in one binder). In this document the transmit PSD is determined.

For this reason, it is hoped to prevent a noise in a high-frequency band higher than the operation band of the station-installed ADSL and to desirably avoid a reduction of the transmission rate of the station-installed ADSL from at present.

As a technical document filed prior to the present invention, a document which discloses about a technique for performing data communication by using an optimum power spectrum depending on an operation state of an adjacent line is known (for example, see Japanese Patent Application Laid-Open (JP-A) No. 2006-14040).

A document which discloses about a technique for suppressing a transmission power in the same frequency band of an operation band used in an adjacent another communication scheme (for example, ADSL) to suppress interference with the other communication scheme is also known (for example, see JP-A No. 2006-115326).

However, in JP-A No. 2006-14040 and JP-A No. 2006-115326, it is not considered that a noise generated in a high-frequency band higher than an operation frequency band used by a communication apparatus is prevented to avoid a reduction in transmission rate of the communication apparatus.

SUMMARY OF THE INVENTION

An exemplary object of the invention is to provide a transmission output control apparatus, a multi-carrier transmission system, a transmission output control method, and a transmission output control program which prevent a noise generated in a high-frequency band higher than an operation frequency used by a communication apparatus to avoid a reduction in transmission rate of the communication apparatus.

A transmission output control apparatus according to an exemplary aspect of the invention controls a transmission output of a signal output to a communication line, including: a storing unit that stores at least one frequency band influencing a reduction in transmission rate of a communication apparatus being present on an adjacent line adjacent to the communication line and including a range which is higher than an operation frequency band used by the communication apparatus; and a control unit that suppresses a transmission output of the signal in the frequency band to output a signal to the communication line.

A multi-carrier transmission system according to an exemplary aspect of the invention is characterized in that a first communication apparatus and a second communication apparatus are connected to each other through a communication line, wherein the first communication apparatus includes a storing unit that stores at least one frequency band influencing a reduction in transmission rate of a communication apparatus being present on an adjacent line adjacent to the communication line and including a range which is higher than an operation frequency band used by the communication apparatus; and a control unit that suppresses a transmission output of the signal in the frequency band to output a signal to the communication line.

A transmission output control method according to an exemplary aspect of the invention is performed by a transmission output control apparatus which controls a transmission output of a signal output to a communication line, wherein the transmission output control apparatus performs the storing step of storing at least one frequency band influencing a reduction in transmission rate of a communication apparatus being present on an adjacent line adjacent to the communication line and including a range which is higher than an operation frequency band used by the communication apparatus; and the control step of suppressing a transmission output of the signal in the frequency band to output a signal to the communication line.

A transmission output control program according to an exemplary aspect of the invention is executed in a transmission output control apparatus which controls a transmission output of a signal output to a communication line, the program causing a computer to perform: a storing process of storing at least one frequency band influencing a reduction in transmission rate of a communication apparatus being present on an adjacent line adjacent to the communication line and including a range which is higher than an operation frequency band used by the communication apparatus; and a control process of suppressing a transmission output of the signal in the frequency band to output a signal to the communication line.

BRIEF DESCRIPTION OF THE DRAWINGS

Features of the disclosed embodiments will be described by way of the following detailed description with reference to the accompanying drawings in which:

FIG. 1 is a diagram to explain a near end cross talk "NEXT" and a far end cross talk "FEXT";

FIG. 2 is a diagram showing a system configuration of a multi-carrier transmission system in which xTU-Cs (XDSL Termination Unit-Center side) (10 and 11) installed on a station side are present a the same position;

FIG. 3 is a diagram showing a system configuration of a remote-terminal (RT) -installed multi-carrier transmission system in which xTU-Cs (XDSL Termination Unit-Center side) (10 and 11) installed on a station side are present at different positions to explain a far end cross talk "FEXT" of the xTU-C (11) of the RT-installed xDSL;

FIG. 4 is a diagram showing a system configuration of a multi-carrier transmission system;

FIG. 5 is a diagram showing a table configuration which manages "station information", "terminal information", and "line signal information" in association with "types of modems";

FIG. 6 is a diagram showing a table configuration which manages "frequency bands" and "signal powers" in association with "types of modems";

FIG. 7 is a diagram showing a "frequency band" which influences a reduction in transmission rate of an xTU-C (500) of an adjacent line (400) and a "signal power" used in the "frequency band";

FIG. 8 is a flow chart showing a control operation performed by an xTU-C (100) according to a first embodiment;

FIG. 9 is a diagram showing a state in which the xTU-C (100) transmits a signal at a predetermined default transmission output value without performing transmission output control;

FIG. 10 is a diagram showing a state in which the xTU-C (100) performs transmission output control, suppresses a transmission output of a signal in a frequency band influencing a reduction in transmission rate of the xTU-C (500) to transmit a signal;

FIG. 11 is a flow chart showing a control operation performed by an xTU-C (100) according to a second embodiment;

FIG. 12 is a diagram for explaining the control operation performed by the xTU-C (100) according to the second embodiment;

FIG. 13 is a diagram showing a state in which the xTU-C (100) performs transmission output control and suppresses a transmission output of a signal in a frequency band influencing a reduction in transmission rate of the xTU-C (500) to transmit a signal;

FIG. 14 is a flow chart showing a method of determining whether suppression control of a transmission output is performed; and

FIG. 15 is a diagram showing another system configuration constituting a multi-carrier transmission system according to the embodiment.

DESCRIPTION OF EXEMPLARY EMBODIMENTS

(Characteristic Feature of Embodiment)

Characteristic features of a multi-carrier transmission system according to an embodiment will be described below.

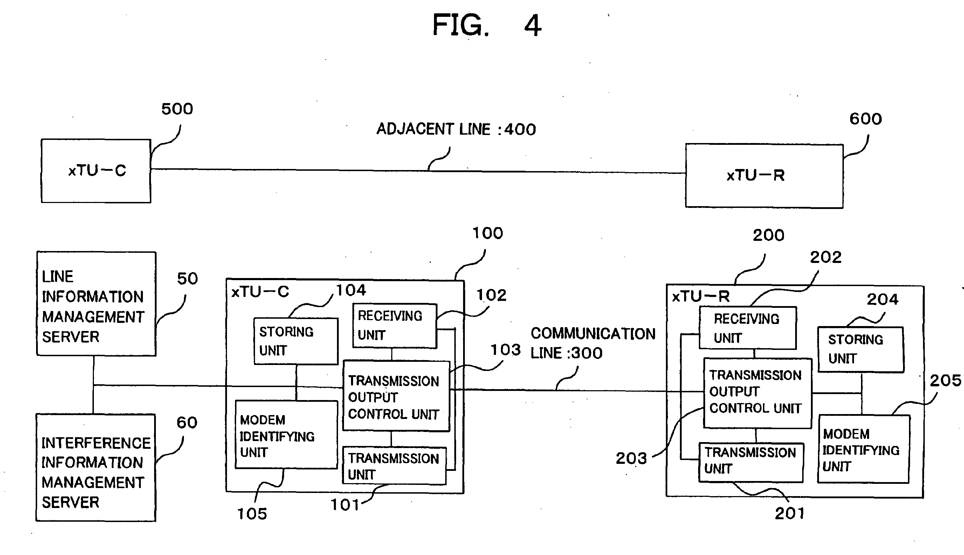

The multi-carrier transmission system according to the embodiment is a multi-carrier transmission system in which, as shown in FIG. 4, a first communication apparatus (corresponding to an xTU-C: 100) and a second communication apparatus (corresponding to an x-TU-R: 200) are connected to each other through a communication line (300).

A first communication apparatus (100) stores at least one frequency band influencing a reduction in transmission rate of a communication apparatus (500) being present on an adjacent line (400) adjacent to a communication line (300) in a storing means (corresponding to a storing unit: (104)). A frequency band to be stored in the first communication apparatus (100) includes a frequency band range which is higher than an operation frequency band used by the communication apparatus (500). The first communication apparatus (100) suppresses a transmission output of a signal in the frequency band stored in the storing means (104) to output the signal to the communication line (300).

In this manner, the first communication apparatus (100) suppresses a transmission output of a signal in a frequency band influencing a reduction in transmission rate of the communication apparatus (500) in at least one frequency band including a range which is higher than an operation frequency band used by the communication apparatus (500) being present on the adjacent line (400) to output the signal to the communication line (300). For this reason, the first communication apparatus (100) prevents a noise generated in the high-frequency band higher than the operation frequency band used by the communication apparatus (500) being present on the adjacent line (400) to make it possible to avoid a reduction in transmission rate of the communication apparatus (500). With reference to the accompanying drawings, the multi-carrier transmission system according to the embodiment will be described below in detail.

<System Configuration of Multi-Carrier Transmission System>

Referring to FIG. 4, a system configuration of a multi-carrier transmission system according to the embodiment will be described.

The multi-carrier transmission system according to the embodiment has a configuration in which an xTU-C (XDSL Termination Unit-Center side) (100) serving as a station-side apparatus and an xTU-R (XDSL Termination Unit-Remote side) (200) serving as a house-side apparatus are connected through the communication line (300).

The xTU-C (100) serving as the station-side apparatus is connected to a line information management server (50) which manages a type of modems and an interference information management server (60) which manages a frequency band influencing the modem.

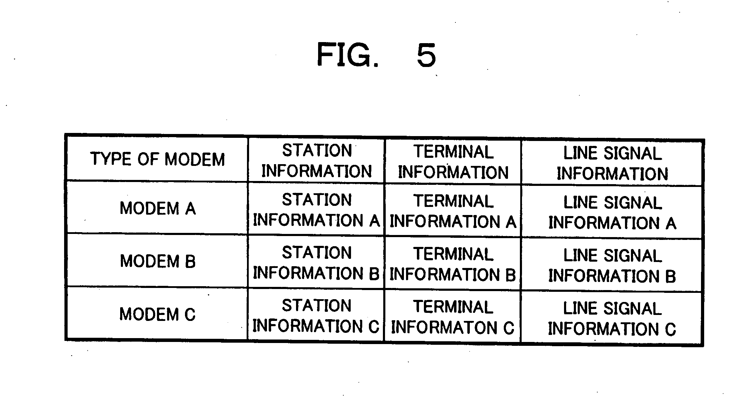

The line information management server (50), for example, as shown in FIG. 5, includes a database which manages "station information", "terminal information", and "line signal information" in association with each "type of a modem".

The "station information" means information related to a position where a station-side communication apparatus being present on an adjacent line is installed. The "terminal information" means information related to a house-side communication apparatus being present on the adjacent line. The "line signal information" means information related to an operation frequency band and a transmission scheme used by the communication apparatus being present on the adjacent line.

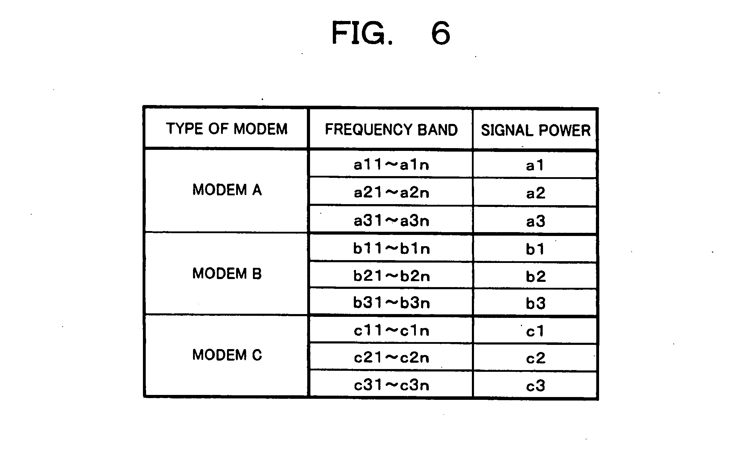

The interference information management server (60), for example, as shown in FIG. 6, includes the database which manages a "frequency band" and a "signal power" in association with each "type of a modem".

The "frequency band" means a frequency band influencing a reduction in transmission rate, and the "signal power" means a signal power used in the frequency band influencing the reduction in transmission rate.

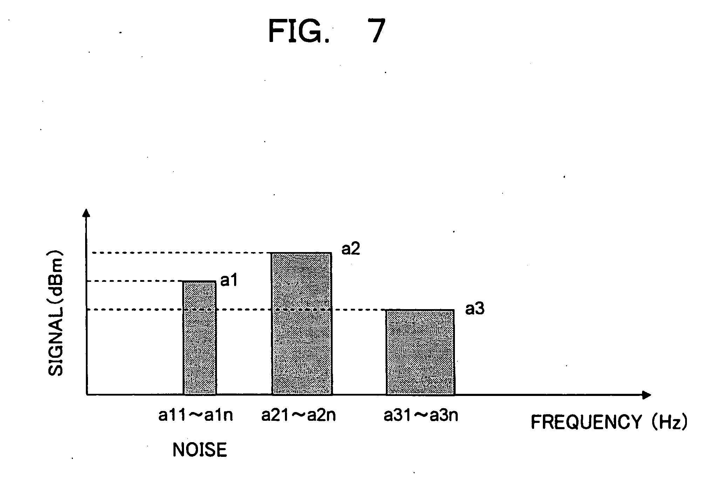

For example, when a "modem A" is used as a "type of a modem" in the xTU-C (500) of the adjacent line (400), as shown in FIG. 7, it is found that a reduction in transmission rate is influenced in "frequency bands": a11 to a1n (n is an arbitrary integer), a21 to a2n, a31 to a3n,.... For this reason, the interference information management server (60) manages the "frequency bands": a11 to a1n, a21 to a2n, a31 to a3n,..., influencing a reduction in transmission rate and "signal powers": a1, a2, a3,... used in the frequency bands in association with the "modem A" in the database.

In this manner, the interference information management server (60) can manage the "frequency band" influencing a reduction in transmission rate and a "signal power" used in the frequency band for each "type of a modem".

<Internal Configuration of xTU-C: 100>

An internal configuration of the xTU-C (100) serving as a station-side apparatus will be described below.

The xTU-C (100) according to the embodiment includes a transmission unit (101), a receiving unit (102), a transmission output control unit (103), a storing unit (104), and a modem identifying unit (105).

The transmission unit (101) is to transmit a signal to the xTU-R (200). The receiving unit (102) is to receive a signal transmitted from the xTU-R (200).

The transmission output control unit (103) is to control a transmission output of a signal transmitted from the xTU-C (100) to the communication line (300).

The storing unit (104) is to store information required for control in communication with the xTU-C (100).

The modem identifying unit (105) is to specify the type of the modem used by another xDSL being present on the adjacent line (400).

Particularly, the modem identifying unit (105) acquires the "station information", "terminal information", and "line signal information" from the outside of the xTU-C (100) and acquires a "type of a modem" corresponding to the acquired "station information", "terminal information", and "line signal information" from the line information management server (50) so as to specify the "type of the modem" used by an xDSL being present on the adjacent line (400).

For example, in the case in FIG. 5, the line information management server (50) manages "station information A", "terminal information A", and "line signal information A" in association with each other for the "modem A" in the database. When the modem identifying unit (105) acquires the "station information A", the "terminal information A", and the "line signal information A", the modem identifying unit (105) is to acquire the "modem A" from a database of the line information management server (50) corresponding to the acquired "station information A", the "terminal information A", and the "line signal information A". In this manner, the modem identifying unit (105) can specify the "modem A" used by the xDSL being present on the adjacent line (400).

A table configuration shown in FIG. 5 which is managed by the line information management server (50) in the database is an example. When the modem identifying unit (105) can specify a type of a modem on the basis of information acquired from the outside of the xTU-C (100), every of information can be managed in association with the "type of the modem" in the database of the line information management server (50). When the number of every "information" which is managed in association with the type of the modem is large, a type of a modem can be specified at high accuracy.

In the case shown in FIG. 5, the line information management server (50) manages "station information", "terminal information", and "line signal information" in association with a "type of a modem" in the database. However, the line information management server (50) may manage at least one of the "station information", the "terminal information", and "line signal information" in association with the "type of the modem" in the database, so that the modem identifying unit (105) can acquire at least one piece of information of the "station information", the "terminal information", and the "line signal information" from the outside of the xTU-C (100) to specify a "type of a modem" from the database of the line information management server (50) on the basis of at least one of the acquired "station information", "terminal information", and the "line signal information".

<Internal Configuration of xTU-R:200>

An internal configuration of the xTU-R (200) serving as a house-side apparatus will be described below.

The xTU-R (200) according to the embodiment includes a transmission unit (201), a receiving unit (202), a transmission output control unit (203), a storing unit (204), and a modem identifying unit (205).

The transmission unit (201) is to transmit a signal to the xTU-C (100). The receiving unit (202) is to receive a signal transmitted from the xTU-C (100).

The transmission output control unit (203) is to control a transmission output of a signal transmitted from the xTU-R (200) to the communication line (300).

The storing unit (204) is to store information required for control in communication with the xTU-R (200).

The modem identifying unit (205) is to specify a type of a modem used by another xDSL being present on the adjacent line (400).

<Processing Operation>

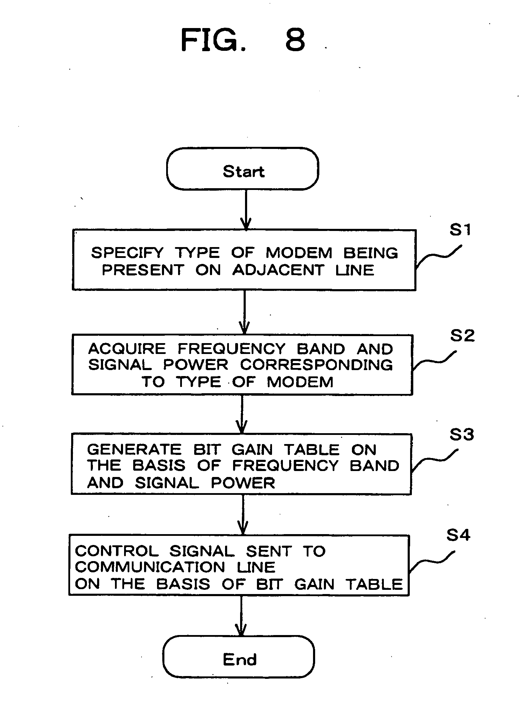

A control operation performed by the xTU-C (100) will be described below with reference to FIG. 8. FIG. 8 is a flow chart showing a control operation to avoid a reduction in transmission rate of the xTU-C (500) being present on the adjacent line (400).

The modem identifying unit (105) specifies a type of a modem of the xTU-C (500) being present on the adjacent line (400)(Step S1).

For example, the modem identifying unit (105) acquires "station information", "terminal information", and "line signal information" from the outside of the xTU-C (100). The modem identifying unit (105) accesses the line information management server (50), acquires a "type of a modem" corresponding to the "station information", the "terminal information", and the "line signal information" acquired from the outside of the xTU-C (100) from the line information management server (50) with reference to the table managed in the database of the line information management server (50) which is shown in FIG. 5, and specifies a type of a modem of the xTU-C (500) being present on the adjacent line (400).

The transmission output control unit (103) accesses the interference information management server (60), acquires a "frequency band" corresponding to the "type of the modem" specified by the modem identifying unit (105) in step S1 and a "signal power" used in the frequency band from the interference information management server (60) with reference to the table managed in the database of the interference information management server (60) which is shown in FIG. 6 (step S2), and stores the acquired "frequency band" and the " signal power" in the storing unit (104).

In this manner, the xTU-C (100) can store and manage the "frequency band" influencing a reduction in transmission rate of the communication apparatus (500) being present on the adjacent line (400) and a "signal power" used in the frequency band in the storing unit (104).

The transmission output control unit (103) generates a bit gain table in which the signal power in the frequency band influencing the reduction in transmission rate of the xTU-C (500) being present on the adjacent line (400) on the basis of the "frequency band" and the "signal power" stored in the storing unit (104) (step S3). The transmission output control unit (103) outputs a signal to the communication line (300) on the basis of the generated bit gain table (step S4).

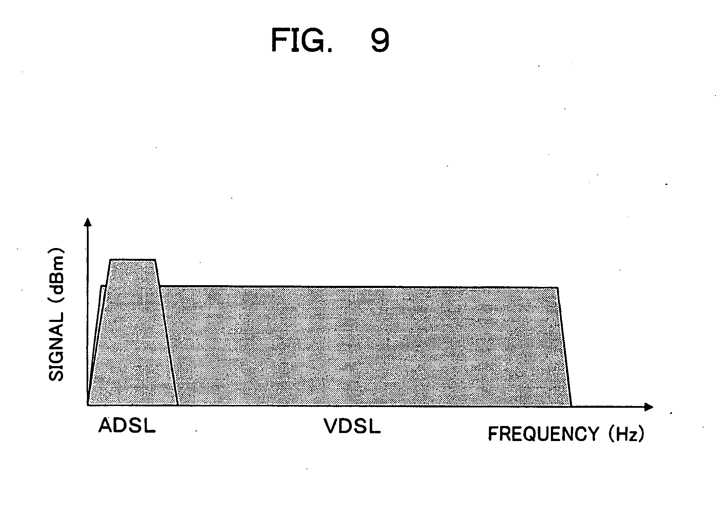

For example, in a state in which the xTU-C (500) being present on the adjacent line (400) does not perform communication, a signal power in the frequency band need not be suppressed, so that a signal is sent to the communication line (300) as a signal power as shown in FIG. 9. FIG. 9 shows a "frequency band" used when the xTU-C (500) being present on the adjacent line (400) performs "ADSL communication" and the xTU-C (100) performs "VDSL communication", and a "signal power" used in the frequency band. As shown in FIG. 9, it is found that the "ADSL" uses a frequency band lower than that of the "VDSL".

When the xTU-C (100) determines that the xTU-C (500) being present on the adjacent line (400) performs communication, the xTU-C (100) generates a bit gain table in which the signal power in the frequency band influencing the reduction in transmission rate of the xTU-C (500) being present on the adjacent line (400) on the basis of the "frequency band" and the "signal power" stored in the storing unit (104), and outputs a signal to the communication line (300) on the basis of the generated bit gain table.

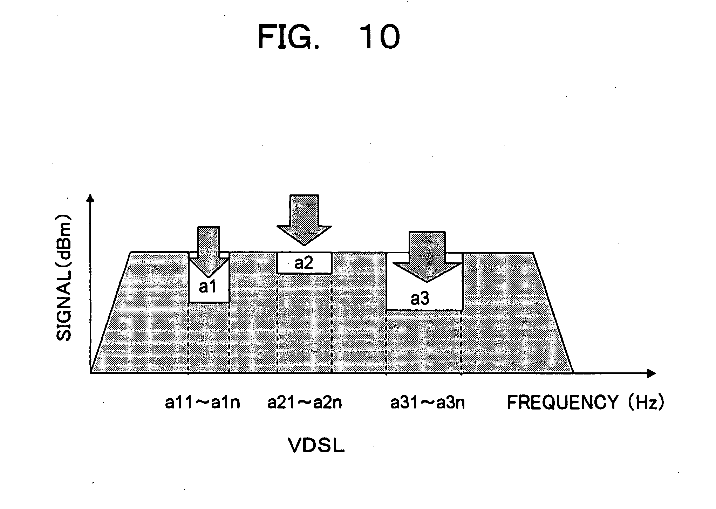

In this manner, for example, when the type of the modem of the xTU-C (500) being present on the adjacent line (400) is the modem A, the modem A is influenced in the frequency bands: a11 to a1n, a21 to a2n, a31 to a3n,... shown in FIG. 7. For this reason, as shown in FIG. 10, the xTU-C (100) suppresses a transmission output of a signal in a frequency band influencing the reduction in transmission rate of the xTU-C (500) on the basis of the "frequency band" and the "signal power" shown in FIG. 7 to output a signal to the communication line (300).

In this manner, the xTU-C (100) can prevent noise generated in a high-frequency band higher than an operation frequency band used by the xTU-C (500) being present on the adjacent line (400), and avoid a reduction in transmission rate of the xTU-C (500).

As described above, the xTU-C (100) according to the embodiment specifies the "type of the modem" of the xTU-C (500) being present on the adjacent line (400) and stores a "frequency band" and a "signal power" corresponding to the specified "type of the modem" in the storing unit (104). The xTU-C (100) suppresses a transmission output of a signal in the frequency band influencing the reduction in transmission rate of the xTU-C (500) on the basis of the "frequency band" and the "signal power" stored in the storing unit (104) to output a signal to the communication line (300).

In this manner, the xTU-C (100) suppresses a transmission output of a signal in a frequency band influencing a reduction in transmission rate of the xTU-C (500) in a frequency band including at least one high-frequency band including a range which is higher than an operation frequency band used by the xTU-C (500) being present on the adjacent line (400) to output a signal to the communication line (300). For this reason, the xTU-C (100) can prevent a noise generated in the high-frequency band higher than the operation frequency band used by the xTU-C (500) being present on the adjacent line (400) to make it possible to avoid the reduction in transmission rate of the xTU-C (500).

(Second Embodiment)

A second embodiment will be described below.

In the multi-carrier transmission system according to the first embodiment, it is assumed that one modem is present on the adjacent line (400) and that the modem identifying unit (105) specifies a type of one modem. However, it can also be assumed that a plurality of modems is present on the adjacent line (400).

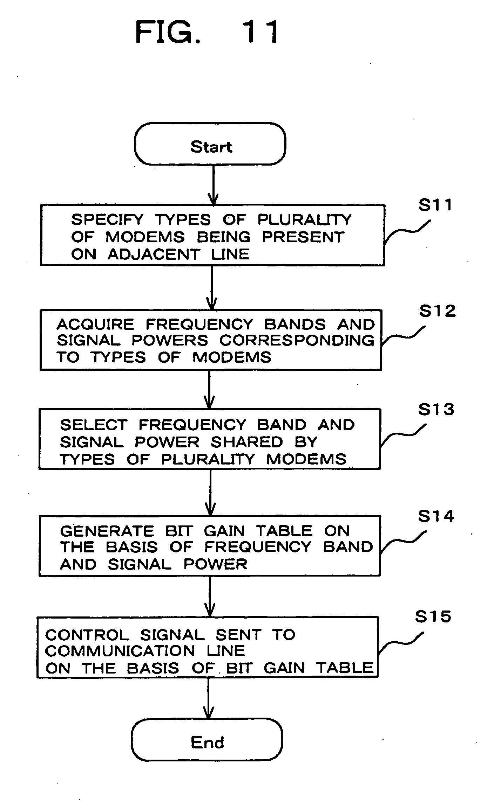

For this reason, in the multi-carrier transmission system according to the second embodiment, when a plurality of modems are present on the adjacent line (400), the modem identifying unit (105) specifies types of a plurality of modems and stores "frequency bands" and "signal powers" corresponding to the specified types of the plurality of modems in the storing unit (104). Then the modem identifying unit (105) suppresses a transmission output of a signal in a frequency band influencing a reduction in transmission rate of the xTU-C (500) on the basis of the plurality of "frequency bands" and the plurality of "signal powers" stored in the storing unit (104) to output a signal to the communication line (300). In this manner, even though the plurality of modems is present on the adjacent line (400), transmission outputs of signals in frequency band suitable for the plurality of modems can be suppressed. The multi-carrier transmission system according to the second embodiment will be described below with reference to FIGS. 11 to 13. A system configuration of the multi-carrier transmission system according to the second embodiment is the same configuration as in the first embodiment.

A control operation performed by the xTU-C (100) will be described below with reference to FIG. 11. FIG. 11 is a flow chart showing a control operation to avoid a reduction in transmission rate of the xTU-C (500) being present on the adjacent line (400).

The modem identifying unit (105) specifies types of a plurality of modems of the xTU-C (500) being present on the adjacent line (400) (step S11).

For example, the modem identifying unit (105) acquires "station information", "terminal information", and "line signal information" from the outside of the xTU-C (100). The modem identifying unit (105) accesses the line information management server (50) and acquires "types of a plurality of modems" corresponding to the "station information", the "terminal information" and the "line signal information" from the line information management server (50) with reference to the table managed in the database of the line information management server (50) which is shown in FIG. 5, and specifies the types of the plurality of modems of the xTU-C (500) being present on the adjacent line (400).

Then the transmission output control unit (103) accesses the interference information management server (60), acquires "frequency bands" corresponding to "types of a plurality of modems" specified by the modem identifying unit (105) in step S11 and "signal powers" used in the frequency bands from the interference information management server (60) with reference to the table managed in the database of the interference information management server (60) which is shown in FIG.6 (Step S12), and stores the acquired "frequency bands" and the "signal powers" in the storing unit (104).

In this manner, the xTU-C (100) can store and manage a plurality of "frequency bands" influencing a reduction in transmission rate of the communication apparatus (500) being present on the adjacent line (400) and "signal powers" used in the frequency bands in the storing unit (104).

Next, the transmission output control unit (103) determines a "frequency band" including a type of each modem and a "signal power" used in the "frequency band" on the basis of the plurality of "frequency bands" and the "signal powers" stored in the storing unit (104) (Step S13).

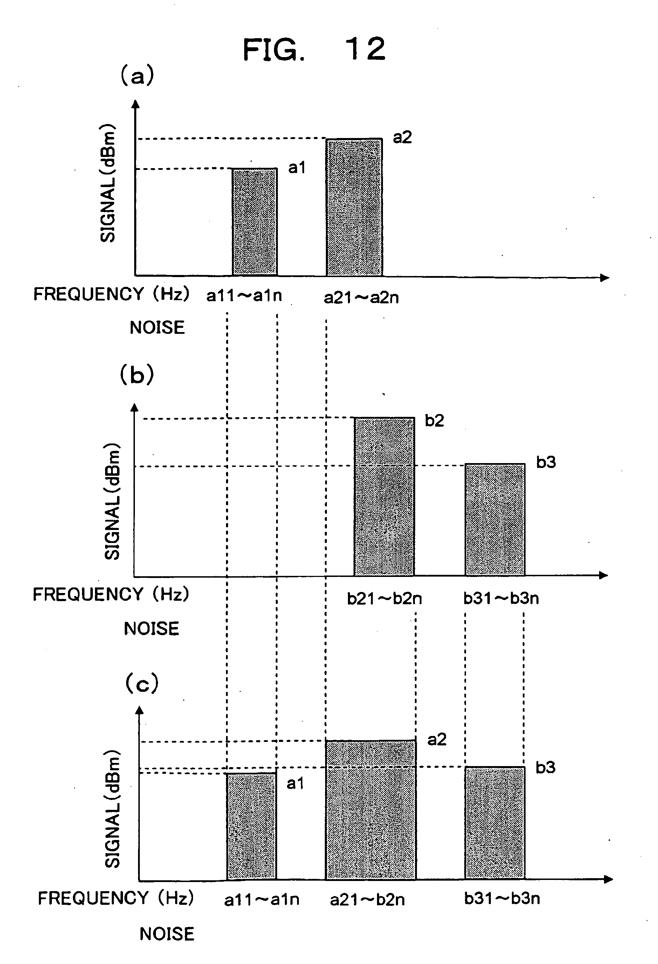

For example, when the transmission output control unit (103) acquires "frequency bands" and "signal powers" corresponding to a modem A and a modem B in step S12, as shown in FIGS. 12A and 12B, the transmission output control unit (103) can specify a frequency band influencing the modem A and a frequency band influencing the modem B. FIG. 12A shows the frequency band influencing the modem A, and FIG. 12B shows a frequency band influencing the modem B.

The transmission output control unit (103) determines, as shown in FIG. 12C, a "frequency band" including the "frequency band" of the modem A and the "frequency band" of the modem B. In this manner, even though types of a plurality of modems are present on the adjacent line (400), a "frequency band including the types of the plurality of modems can be determined.

As the "signal power", a minimum signal power is preferably determined by the modem A and the modem B. For example, in FIG. 12C, a "signal power" in a frequency band "a21 to b2n" including the modem A and the modem B is given by "b2 > a2", so that "a2" is selected.

Depending on a ratio of the "frequency band" of the modem A to the "frequency band" of the modem B obtained when the "frequency band" including the modem A and the modem B is determined, a signal power used in the "frequency band" including the modem A and the modem B can also be determined.

For example, when the ratio of the "frequency band" of the modem A to the "frequency band" of the modem B is given by modem A : modem B = 7 : 3, a signal power: x used in the "frequency band" including the modem A and the modem B is a signal power calculated by $x = (7a + 3b) \div 10$.

The transmission output control unit (103) generates a bit gain table, in which a signal power in a frequency band influencing a reduction in transmission rate of the xTU-C (500) being present on the adjacent line (400) is suppressed, on the basis of the "frequency band" including the types of the plurality of modems shown in FIG. 12C and the "signal powers" used in the frequency bands (step S14). Then, the transmission output control unit (103) outputs a signal to the communication line (300) by using the generated bit gain table (step S15).

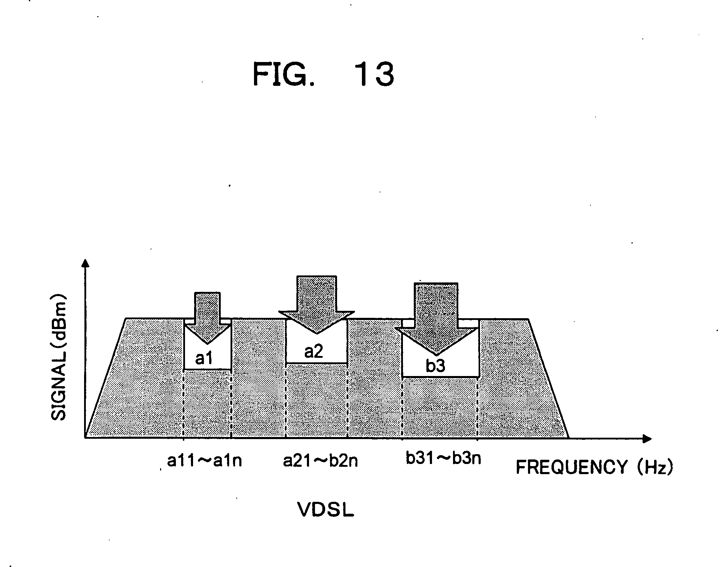

In this manner, the xTU-C (100), as shown in FIG. 13, suppresses a transmission output of a signal in the frequency band influencing the reduction in transmission rate of the xTU-C (500) on the basis of the frequency band and the signal power shown in FIG. 12C to output a signal to the communication line (300).

In this manner, in the multi-carrier transmission system according to the second embodiment, when a plurality of modems are present on the adjacent line (400), the modem identifying unit (105) specifies types of a plurality of modems and stores frequency bands and signal powers corresponding to the specified types of the plurality of modems in the storing unit (104). The modem identifying unit (105) suppresses a transmission output of a signal in the frequency band influencing the reduction in transmission rate of the xTU-C (500) on the basis of the plurality of frequency bands and the plurality of signal powers stored in the storing unit (104) to output a signal to the communication line (300). In this manner, even though the plurality of modems is present on the adjacent line (400), a transmission output of a signal in a frequency band suitable for the plurality of modems can be suppressed.

In the second embodiment described above, as shown in FIG. 12C, the "frequency band" including the "frequency band" of the modem A and the "frequency band" of the modem B is determined. However, when the number of types of modems being present on the adjacent line (400) is large, a "frequency band" including the types of the modems at a predetermined ratio can be determined.

For example, as the types of the modems being present on the adjacent line (400), a modem A, a modem B, a modem C, and a modem D are assumed. When the frequency bands influencing the modems are given by modem A: 2 to 5 MHz,..., modem B: 3 to 4 MHz,..., modem C: 2 to 6 MHz,..., and modem D: 3 to 8 MHz..., a frequency band including the modems A to D ranges from 2 to 8 MHz. However, a frequency band of 2 to 5 MHz shared by the modems A to D at a ratio of 50% or more may be determined. The predetermined radio can be arbitrarily set.

The above embodiments are preferred embodiments of the present invention. The spirit and scope of the invention are not limited by only the above embodiments. Various changes and modifications of the invention can be effected without departing from the gist of the invention.

For example, a method of determining whether suppression control of a transmission output in the embodiment is performed can be executed when it is determined that a noise having a value equal to or higher than a predetermined threshold value is generated in the adjacent line (400).

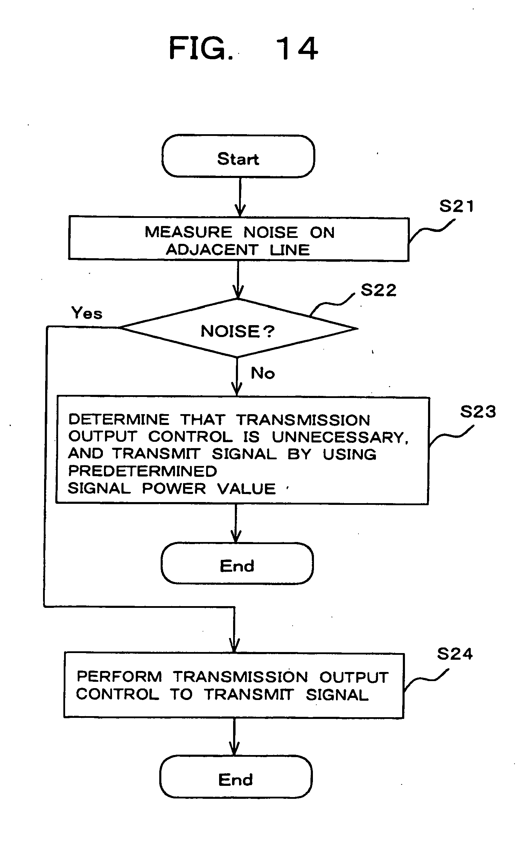

For example, as shown in FIG. 14, the xTU-C (100) measures a crosstalk noise of the adjacent line (400) by using a spectrum analyzer or the like (step S21).

The xTU-C (100) determines whether a noise having a value equal to or higher than a predetermined threshold value is generated in the adjacent line (400) (step S22).

When it is not determined that the noise having the value equal to or higher than the predetermined threshold value is generated in the adjacent line (400) (step S22/No), the xTU-C (100) determines that transmission output control is unnecessary, and a signal is transmitted at a default predetermined transmission output value shown in FIG. 9 (step S23). As the predetermined transmission output value, a maximum transmission output value disclosed in ITU-T recommendation G.993.2, ITU-T recommendation G.993.3, and the like is applicable.

When it is determined that the noise having the value equal to or higher than the predetermined threshold value is generated in the adjacent line (400) (step S23/Yes), the xTU-C (100) performs suppression control of a transmission output and transmission output control of a signal transmitted to the communication line (300).

In this manner, depending on whether the noise having the value equal to or higher than the predetermined threshold value is generated in the adjacent line (400), it can be determined whether transmission output control of a signal transmitted to the communication line (300) is performed. The method of measuring the crosstalk noise in the adjacent line (400) is not limited to a spectrum analyzer or the like. The crosstalk noise in the adjacent line (400) can be measured by applying every method. The noise may also be measured by using a modem.

In the embodiments described above, a specifying method used when a type of a modem being present on the adjacent line (400) is specified is not limited to a specific method. For example, information is acquired from modem management software in a telephone exchange station, so that a type of a modem is specified on the basis of the acquired information. Alternatively, a type of a modem can be specified by directly using information installed in a house, or a type of a modem can be specified on the basis of a signal of a line, crosstalk noise, or the like.

In the embodiments described above, as shown in FIGS. 5 and 6, pieces of information are managed in units of "types of modems". However, the technical idea of the present invention is not limited to a type of a modem. When a frequency band influencing a reduction in transmission rate of a communication apparatus can be specified, everything can be applied.

In the above embodiments, a suppression value which suppresses a transmission output of a signal in a frequency band influencing a reduction in transmission rate of the xTU-C (500) can be arbitrarily adjusted. For example, the suppression value of the transmission output can also be arbitrarily adjusted depending on a type of a modem, or a transmission output of a signal in the frequency band influencing a reduction in transmission rate of the xTU-C (500) can be completely made zero. The suppression value suppressing a transmission output can also be adjusted depending on noise generated in the adjacent line (400).

In the embodiments described above, the line information management server (50), for example, as shown in FIG. 5, manages "station information", "terminal information", and "line signal information" in association with each "type of a modem", and the interference information management server (60), for example, as shown in FIG. 6, manages a "frequency band" and a "signal power" in association with each "type of a modem". However, the pieces of information managed by the line information management server (50) and the frequency band management server (60) can also be managed by the xTU-C (100).

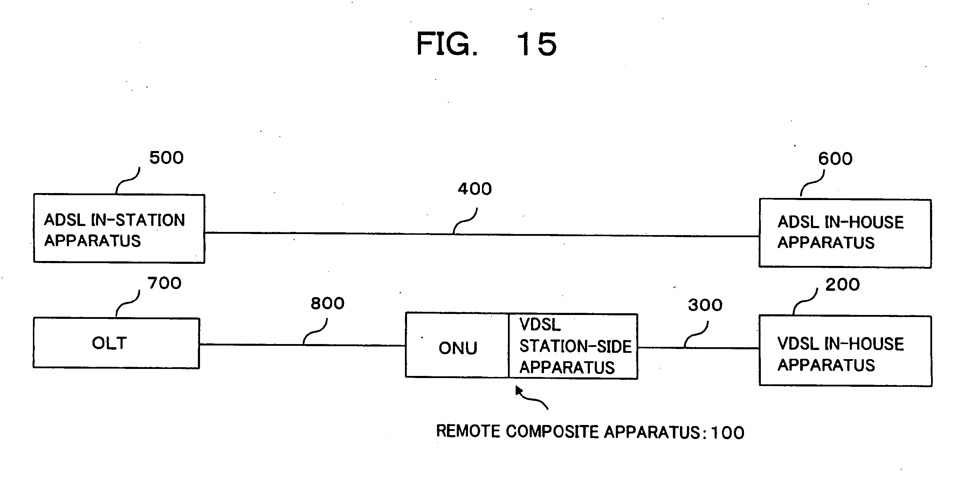

The multi-carrier transmission system according to the embodiment described above can also be applied to a system as shown in FIG. 15. In the system configuration shown in FIG. 15, an ADSL in-station apparatus (500) and an ADSL in-house apparatus (600) are connected to each other through a communication line (400). And an OLT (Optical Line Terminal) (700) and a remote composite apparatus (100) are connected to each other through a communication line (800), and the remote composite apparatus (100) and a VDSL in-house apparatus (200) are connected to each other through a communication line (300). The remote composite apparatus (100) includes an ONU (Optical Network Unit) and a VDSL station-side apparatus.

A control operation for the xTU-C (100) and the xTU-R (200) constituting the multi-carrier transmission system according to the above embodiments in the communication apparatus can be executed by not only a hardware configuration but also software such as a computer program. The program is recorded on a recording medium such as an optical recording medium, a magnetic recording medium, a magnetooptical recording medium, or a semiconductor or the like, and the program is loaded from the recording medium onto a communication apparatus to make it possible to execute the control operation in the communication apparatus. The program is loaded from an external equipment connected through a predetermined network onto the communication apparatus to also make it possible to execute the control operation in the communication apparatus.

A transmission output control apparatus, a multi-carrier transmission system, a transmission output control method, and a transmission output control program according to the present invention can be applied to an xDSL (x Digital Subscriber Line) (x is a generic name of A, H, S, V, or the like) which performs data transmission at a high rate of several M bits/second through a metallic cable such as a telephone line.

A third exemplary embodiment of the invention is a transmission output control apparatus including: an interference management unit that manages the frequency band for each type of the communication apparatus; a specifying unit that specifies the type of the communication apparatus being present on the adjacent line; and an acquiring unit that acquires a frequency band depending on the type of the communication apparatus from the interference management means, wherein the storing unit stores the frequency band depending on the type of the communication apparatus.

A fourth exemplary embodiment of the invention is that the acquiring unit acquires, when communication apparatuses of a plurality of types are specified by the specifying unit, a plurality of frequency bands depending on the types of the communication apparatuses by the interference management unit, the storing unit stores the plurality of frequency bands depending on the types of the communication apparatuses, and the control unit determines a frequency band which suppresses a transmission output on the basis of the plurality of frequency bands and suppresses a transmission output of a signal in the determined frequency band.

A fifth exemplary embodiment of the invention is that the control unit determines a frequency band including the plurality of frequency bands as the frequency band which suppresses the transmission output.

A sixth exemplary embodiment of the invention is that the control unit determines a frequency band including the plurality of frequency bands at a predetermined ratio as the frequency band which suppresses the transmission output.

A seventh exemplary embodiment of the invention is that the transmission output control apparatus includes a setting unit that sets the predetermined ratio.

A eighth exemplary embodiment of the invention is that a transmission output control apparatus includes: a line management unit that manages states of the adjacent lines and types of the communication apparatuses in association with each other; and a state acquiring unit that specifies a state of the adjacent line, wherein the specifying unit specifies a type of the communication apparatus corresponding to the state of the adjacent line specified by the state acquiring unit from the line management unit.

A ninth exemplary embodiment of the invention is that the state of the adjacent line is at least one of information related to a position where a station-side communication apparatus being present on the adjacent line is installed, information related to a house-side communication apparatus being present on the adjacent line, and information related to an operation frequency band and a transmission scheme which are used by the communication apparatuses being present on the adjacent line.

A tenth exemplary embodiment of the invention is that the interference management unit is arranged separately from and independently of the transmission output control apparatus.

An eleventh exemplary embodiment of the invention is that the line management unit is arranged separately from and independently of the transmission output control apparatus.

An twelfth exemplary embodiment of the invention is that a transmission output control apparatus includes an adjustment unit which adjusts a suppression value which suppresses a transmission output of a signal in a frequency band.

An exemplary advantage according to the present invention is that in a frequency band including a range which is higher than an operation frequency band used by a communication apparatus, it is possible to suppress a transmission output of a signal in a frequency band influencing a reduction in transmission rate of the communication apparatus and to output a signal to a communication line. For this reason, a generation of a noise in a high-frequency band higher than the operation frequency band used by a communication apparatus being present on an adjacent line can be prevented, and a reduction of the transmission rate of the communication apparatus can be avoided.

While the invention has been particularly shown and described with reference to exemplary embodiments thereof, the invention is not limited to these embodiments.

**Claims**

1. A transmission output control apparatus that controls a transmission output of a signal output to a communication line, comprising:

   storing means for storing at least one frequency band that influences a reduction in transmission rate of a communication apparatus being present on an adjacent line adjacent to the communication line and includes a range that is higher than an operation frequency band used by the communication apparatus; and
   control means for suppressing a transmission output of the signal in the frequency band to output a signal to the communication line.

2. The transmission output control apparatus according to claim 1, comprising:

   interference management means for managing the frequency band for each type of the communication apparatus;
   specifying means for specifying the type of the communication apparatus being present on the adjacent line; and
   acquiring means for acquiring the frequency band depending on the type of the communication apparatus from the interference management means, wherein
   the storing means stores the frequency band depending on the type of the communication apparatus.

3. The transmission output control apparatus according to claim 2, wherein
   the acquiring means acquires, when communication apparatuses of a plurality of types are specified by the specifying means, a plurality of frequency bands depending on the types of the communication apparatuses by the interference management means,
   the storing means stores the plurality of frequency bands depending on the types of the communication apparatuses, and
   the control means determines a frequency band that suppresses a transmission output on the basis of the plurality of frequency bands and suppresses a transmission output of a signal in the determined frequency band.

4. The transmission output control apparatus according to claim 3, wherein
   the control means determines a frequency band including the plurality of frequency bands as the frequency band that suppresses the transmission output.

5. The transmission output control apparatus according to claim 3, wherein
   the control means determines a frequency band including the plurality of frequency bands at a predetermined ratio as the frequency band that suppresses the transmission output.

6. The transmission output control apparatus according to claim 5, comprising
   setting means for setting the predetermined ratio.

7. The transmission output control apparatus according to claim 2, comprising:

   line management means for managing states of the adjacent lines and types of the communication apparatuses in association with each other; and
   state acquiring means for specifying a state of the adjacent line, wherein
   the specifying means specifies a type of the communication apparatus corresponding to the state of the adjacent line specified by the state acquiring means from the line management means.

8. The transmission output control apparatus according to claim 7, wherein
   the state of the adjacent line is at least one of information related to a position where a station-side communication apparatus being present on the adjacent line is installed, information related to a house-side communication apparatus being present on the adjacent line, and information related to an operation frequency band and a transmission scheme that are used by the communication apparatuses being present on the adjacent line.

9. The transmission output control apparatus according to claim 2, wherein
   the interference management means is arranged separately from and independently of the transmission output control apparatus.

10. The transmission output control apparatus according to claim 7, wherein
the line management means is arranged separately from and independently of the transmission output control apparatus.

11. The transmission output control apparatus according to claim 1, comprising
adjustment means for adjusting a suppression value that suppresses a transmission output of a signal in the frequency band.

12. A multi-carrier transmission system in which a first communication apparatus and a second communication apparatus are connected to each other through a communication line wherein
the first communication apparatus includes:

storing means for storing at least one frequency band influencing a reduction in transmission rate of a communication apparatus being present on an adjacent line adjacent to the communication line and including a range that is higher than an operation frequency band used by the communication apparatus; and
control means for suppressing a transmission output of the signal in the frequency band to output a signal to the communication line.

13. A transmission output control method that is performed in a transmission output control apparatus that controls a transmission output of a signal output to a communication line, wherein
the transmission output control apparatus performs:

the storing step of storing at least one frequency band influencing a reduction in transmission rate of a communication apparatus being present on an adjacent line adjacent to the communication line and including a range that is higher than an operation frequency band used by the communication apparatus; and
the control step of suppressing a transmission output of the signal in the frequency band to output a signal to the communication line.

14. A transmission output control program that is executed in a transmission output control apparatus that controls a transmission output of a signal output to a communication line, wherein
the transmission output control apparatus is caused to execute:

a storing process of storing at least one frequency band influencing a reduction in transmission rate of a communication apparatus being present on an adjacent line adjacent to the communication line and including a range that is higher than an operation frequency band used by the communication apparatus; and
a control process of suppressing a transmission output of the signal in the frequency band to output a signal to the communication line.

**Patentansprüche**

1. Übertragungsausgabesteuergerät, das eine Übertragungsausgabe einer Signalausgabe an eine Kommunikationsleitung steuert, mit:

Speichermitteln zum Speichern von zumindest einem Frequenzband, das eine Reduktion in der Übermittlungsrate eines Kommunikationsgerätes beeinflusst, das an einer angrenzenden Leitung, angrenzend an die Kommunikationsleitung, vorhanden ist und einen Bereich umfasst, der höher als ein Betriebsfrequenzband ist, der durch das Kommunikationsgerät verwendet wird, und
Steuermitteln zum Unterdrücken einer Übertragungsausgabe des Signals in dem Frequenzband zum Ausgeben eines Signals an die Kommunikationsleitung.

2. Übertragungsausgabesteuergerät gemäß Anspruch 1 mit:

Interferenzverwaltungsmitteln zum Verwalten des Frequenzbandes für jede Art von Kommunikationsgerät,
Spezifizierungsmitteln zum Angeben des Typs des Kommunikationsgerätes, das auf der angrenzenden Leitung vorhanden ist, und
Akquirierungsmitteln zum Akquirieren des Frequenzbandes abhängig von dem Typ des Kommunikationsgerätes von den Interferenzverwaltungsmitteln, wobei

das Speichermittel das Frequenzband abhängig von dem Typ des Kommunikationsgerätes speichert.

3. Übertragungsausgabesteuergerät nach Anspruch 2, wobei
die Akquirierungsmittel, wenn Kommunikationsgeräte eine Anzahl von Arten durch die Spezifizierungsmittel angegeben sind, eine Anzahl von Frequenzbändern abhängig von den Arten die Kommunikationsgeräte durch das Interferenzverwaltungsmittel akquiriert,
wobei die Steuermittel die Anzahl von Frequenzbändern abhängig von den Arten der Kommunikationsgeräte speichern und
die Steuermittel ein Frequenzband bestimmen, das eine Übertragungsausgabe auf Grundlage der Anzahl von Frequenzbändern unterdrückt und eine Übertragungsausgabe eines Signals in dem bestimmten Frequenzband unterdrückt.

4. Übertragungsausgabesteuergerät nach Anspruch 3, wobei die Steuermittel ein Frequenzband bestimmen, einschließlich der Anzahl von Frequenzbändern, als das Frequenzband, das die Übertragungsausgabe unterdrückt.

5. Übertragungsausgabesteuergerät nach Anspruch 3, wobei die Steuermittel ein Frequenzband einschließlich der Anzahl von Frequenzbändern bei einem vorgegebenen Verhältnis als das Frequenzband bestimmt, das die Übertragungsausgabe unterdrückt.

6. Übertragungsausgabesteuergerät nach Anspruch 5, mit Einstellmitteln zum Einstellen des vorgegebenen Verhältnisses.

7. Übertragungsausgabesteuergerät nach Anspruch 2 mit:

Leitungsverwaltungsmitteln zum Verwalten von Zuständen der benachbarten Leitungen und Arten von Kommunikationsgeräten in Zuordnung zueinander und
Statusakquirierungsmitteln zum Spezifizieren eines Status der benachbarten Leitung, wobei
die Spezifizierungsmittel eine Art des Kommunikationsgerätes entsprechend dem Zustand der benachbarten Leitung angeben, die durch die Zustandsakquirierungsmittel von den Leitungsverwaltungsmitteln angeben.

8. Übertragungsausgabesteuergerät nach Anspruch 7, wobei der Zustand der benachbarten Leitung mindestens einer einer Information ist, die sich auf eine Position bezieht, wobei ein stationsseitiges Kommunikationsgerät auf der benachbarten Leitung, die installiert ist, vorhanden ist, Information ist, die sich auf ein hausseitiges Kommunikationsgerät bezieht, das auf der benachbarten Leitung vorhanden ist, und Information ist, die sich auf ein Betriebsfrequenzband bezieht, und ein Übertragungsschema, die durch das Kommunikationsgerät verwendet werden, das auf der angrenzenden Leitung vorhanden ist.

9. Übertragungsausgabesteuergerät nach Anspruch 2, wobei die Interferenzverwaltungsmittel separat und unabhängig von dem Übertragungsausgabesteuergerät angeordnet sind.

10. Übertragungsausgabesteuergerät nach Anspruch 7, wobei die Leitungsverwaltungsmittel separat und unabhängig von dem Übertragungsausgabesteuergerät angeordnet sind.

11. Übertragungsausgabesteuergerät nach Anspruch 1, mit:

Einstellmitteln zum Einstellen eines Unterdrückungswertes, der eine Übertragungsausgabe eines Signals in dem Frequenzband unterdrückt.

12. Mehrfachträgerübertragungssystem, in dem ein erstes Kommunikationsgerät und ein zweites Kommunikationsgerät miteinander über eine Kommunikationsleitung verbunden sind, wobei
das erste Kommunikationsgerät aufweist:

Speichermittel zum Speichern von zumindest einem Frequenzband, das eine Reduktion der Übertragungsrate eines Kommunikationsgerätes, das auf einer benachbarten Leitung, benachbart zu der Kommunikationsleitung, vorhanden ist, beeinflusst und einen Bereich umfasst, der höher ist als ein Betriebsfrequenzband, das durch das Kommunikationsgerät verwendet wird, und
Steuermittel zum Unterdrücken einer Übertragungsausgabe des Signals in dem Frequenzband zur Ausgabe eines Signals an die Kommunikationsleitung.

**13.** Übertragungsausgabesteuerverfahren, das in einem Übertragungsausgabesteuergerät durchgeführt wird, das eine Übertragungsausgabe einer Signalausgabe an eine Kommunikationsleitung steuert, wobei das Übertragungsausgabesteuergerät durchführt:

einen Speicherschritt zum Speichern von zumindest einem Frequenzband, das eine Reduktion in der Übertragungsrate eines Kommunikationsgerätes beeinflusst, das auf einer benachbarten Leitung, benachbart zu der Kommunikationsleitung, vorhanden ist, und einen Bereich umfasst, der höher ist als ein Betriebsfrequenzband, das von dem Kommunikationsgerät verwendet wird, und
einen Steuerschritt zum Unterdrücken einer Übertragungsausgabe des Signals in dem Frequenzband zur Ausgabe eines Signals an die Kommunikationsleitung.

**14.** Übertragungsausgabesteuerprogramm, das in einem Übertragungsausgabesteuergerät durchgeführt wird, das eine Übertragungsausgabe einer Signalausgabe an eine Kommunikationsleitung steuert, wobei das Übertragungsausgabesteuergerät veranlasst wird, auszuführen:

einen Speichervorgang zum Speichern von zumindest einem Frequenzband, das eine Reduktion in der Übertragungsrate eines Kommunikationsgerätes beeinflusst, das auf einer benachbarten Leitung, benachbart zu der Kommunikationsleitung, vorhanden ist, und einen Bereich umfasst, der höher ist als ein Betriebsfrequenzband, das durch das Kommunikationsgerät verwendet wird, und
einen Steuerprozess zum Unterdrücken einer Übertragungsausgabe des Signals in dem Frequenzband zur Ausgabe eines Signals an die Kommunikationsleitung.

**Revendications**

**1.** Appareil de commande de sortie de transmission qui commande une sortie de transmission d'une sortie de signal sur une ligne de communication, comprenant :

un moyen de stockage pour stocker au moins une bande de fréquences qui influence une réduction de débit de transmission d'un appareil de communication présent sur une ligne adjacente à la ligne de communication et qui comprend une plage qui est supérieure à une bande de fréquences de fonctionnement utilisée par l'appareil de communication ; et
un moyen de commande pour supprimer une sortie de transmission du signal dans la bande de fréquences pour délivrer un signal à la ligne de communication.

**2.** Appareil de commande de sortie de transmission selon la revendication 1, comprenant :

un moyen de gestion d'interférences pour gérer la bande de fréquences pour chaque type de l'appareil de communication ;
un moyen de spécification pour spécifier le type de l'appareil de communication présent sur la ligne adjacente ; et
un moyen d'acquisition pour acquérir la bande de fréquences en fonction du type de l'appareil de communication à partir du moyen de gestion d'interférences, dans lequel
le moyen de stockage stocke la bande de fréquences en fonction du type de l'appareil de communication.

**3.** Appareil de commande de sortie de transmission selon la revendication 2, dans lequel
le moyen d'acquisition acquiert, lorsque les appareils de communication d'une pluralité de types sont spécifiés par le moyen de spécification, une pluralité de bandes de fréquences en fonction des types des appareils de communication par le moyen de gestion d'interférences,
le moyen de stockage stocke la pluralité de bandes de fréquences en fonction des types des appareils de communication, et
le moyen de commande détermine une bande de fréquences qui supprime une sortie de transmission sur la base de la pluralité de bandes de fréquences et supprime une sortie de transmission de signal dans la bande de fréquences déterminée.

**4.** Appareil de commande de sortie de transmission selon la revendication 3, dans lequel
le moyen de commande détermine une bande de fréquences comprenant la pluralité de bandes de fréquences en tant que la bande de fréquences qui supprime la sortie de transmission.

**5.** Appareil de commande de sortie de transmission selon la revendication 3, dans lequel le moyen de commande détermine une bande de fréquences comprenant la pluralité de bandes de fréquences à un débit prédéterminé en tant que la bande de fréquences qui supprime la sortie de transmission.

**6.** Appareil de commande de sortie de transmission selon la revendication 5, comprenant un moyen de réglage pour régler le débit prédéterminé.

**7.** Appareil de commande de sortie de transmission selon la revendication 2, comprenant un moyen de gestion de ligne pour gérer des états des lignes adjacentes et des types d'appareils de communication en association entre eux ; et un moyen d'acquisition d'état pour spécifier un état de la ligne adjacente, dans lequel le moyen de spécification spécifie un type de l'appareil de communication correspondant à l'état de la ligne adjacente spécifié par le moyen d'acquisition d'état à partir du moyen de gestion de ligne.

**8.** Appareil de commande de sortie de transmission selon la revendication 7, dans lequel l'état de la ligne adjacente est au moins l'une d'une information relative à une position à laquelle un appareil de communication côté station présent sur la ligne adjacente est installé, d'une information relative à un appareil de communication côté maison présent sur la ligne adjacente, et d'une information relative à une bande de fréquences de fonctionnement et d'un schéma de transmission qui sont utilisés par les appareils de communication présents sur la ligne adjacente.

**9.** Appareil de commande de sortie de transmission selon la revendication 2, dans lequel le moyen de gestion d'interférences est agencé séparément et indépendamment de l'appareil de commande de sortie de transmission.

**10.** Appareil de commande de sortie de transmission selon la revendication 7, dans lequel le moyen de gestion de ligne est agencé séparément et indépendamment de l'appareil de commande de sortie de transmission.

**11.** Appareil de commande de sortie de transmission selon la revendication 1, comprenant un moyen de réglage pour régler une valeur de suppression qui supprime une sortie de transmission d'un signal dans la bande de fréquences.

**12.** Système de transmission multiporteur dans lequel un premier appareil de communication et un second appareil de communication sont connectés l'un à l'autre à travers une ligne de communication, dans lequel le premier appareil de communication comprend :

un moyen de stockage pour stocker au moins une bande de fréquences qui influence une réduction de débit de transmission d'un appareil de communication présent sur une ligne adjacente à la ligne de communication et qui comprend une plage qui est supérieure à une bande de fréquences de fonctionnement utilisée par l'appareil de communication ; et un moyen de commande pour supprimer une sortie de transmission du signal dans la bande de fréquences pour délivrer un signal à la ligne de communication.

**13.** Procédé de commande de sortie de transmission qui est effectué dans un appareil de commande de sortie de transmission qui commande une sortie de transmission d'une sortie de signal sur une ligne de communication, dans lequel l'appareil de commande de sortie de transmission effectue :

l'étape de stockage consistant à stocker au moins une bande de fréquences qui influence une réduction de débit de transmission d'un appareil de communication présent sur une ligne adjacente à la ligne de communication et qui comprend une plage qui est supérieure à une bande de fréquences de fonctionnement utilisée par l'appareil de communication ; et l'étape de commande consistant à supprimer une sortie de transmission du signal dans la bande de fréquences pour délivrer un signal à la ligne de communication.

**14.** Programme de commande de sortie de transmission qui est exécuté dans un appareil de commande de sortie de transmission qui commande une sortie de transmission d'une sortie de signal sur une ligne de communication, dans lequel

l'appareil de commande de sortie de transmission est amené à exécuteur :

un processus de stockage consistant à stocker au moins une bande de fréquences qui influence une réduction de débit de transmission d'un appareil de communication présent sur une ligne adjacente à la ligne de communication et qui comprend une plage qui est supérieure à une bande de fréquences de fonctionnement utilisée par l'appareil de communication ; et

un processus de commande consistant à supprimer une sortie de transmission du signal dans la bande de fréquences pour délivrer un signal à la ligne de communication.

# FIG. 1

FAR END CROSS TALK "FEXT"

COMMUNICATION LINE : 2

CROSS TALK SOURCE
(THE SAME DIRECTION AS
THAT OF TARGET LINE)

COMMUNICATION LINE : 1

TARGET LINE

COMMUNICATION LINE : 3

CROSS TALK SOURCE
(DIRECTION OPPOSING
TARGET LINE)

NEAR END CROSS TALK "NEXT"

EP 1 909 405 B1

# FIG. 2

FAR END CROSS TALK "FEXT"

30

10

STATION-INSTALLED xDSL

20

xTU-C

xTU-R

11

21

xTU-C

xTU-R

STATION-INSTALLED xDSL

31

TRANSMISSION LINE

EP 1 909 405 B1

# FIG. 3

FAR END CROSS TALK "FEXT"

STATION-INSTALLED
xDSL

RT-INSTALLED
xDSL

xTU-C  10  30

xTU-C  11

xTU-R  20

xTU-R  21

31

EP 1 909 405 B1

# FIG. 4

# FIG. 5

| TYPE OF MODEM | STATION INFORMATION | TERMINAL INFORMATION | LINE SIGNAL INFORMATION |
|---|---|---|---|
| MODEM A | STATION INFORMATION A | TERMINAL INFORMATION A | LINE SIGNAL INFORMATION A |
| MODEM B | STATION INFORMATION B | TERMINAL INFORMATION B | LINE SIGNAL INFORMATION B |
| MODEM C | STATION INFORMATION C | TERMINAL INFORMATON C | LINE SIGNAL INFORMATION C |

EP 1 909 405 B1

# FIG. 6

| TYPE OF MODEM | FREQUENCY BAND | SIGNAL POWER |
|---|---|---|
| MODEM A | a11~a1n | a1 |
| | a21~a2n | a2 |
| | a31~a3n | a3 |
| MODEM B | b11~b1n | b1 |
| | b21~b2n | b2 |
| | b31~b3n | b3 |
| MODEM C | c11~c1n | c1 |
| | c21~c2n | c2 |
| | c31~c3n | c3 |

EP 1 909 405 B1

FIG. 7

# FIG. 8

```
                    ┌──────────────┐
                    │    Start     │
                    └──────┬───────┘
                           │
                           ▼
       ┌───────────────────────────────────┐   S1
       │  SPECIFY  TYPE  OF  MODEM  BEING   │
       │   PRESENT  ON  ADJACENT  LINE      │
       └──────────────────┬────────────────┘
                           │
                           ▼
       ┌───────────────────────────────────┐   S2
       │  ACQUIRE  FREQUENCY  BAND  AND     │
       │  SIGNAL  POWER  CORRESPONDING      │
       │      TO  TYPE  OF  MODEM           │
       └──────────────────┬────────────────┘
                           │
                           ▼
       ┌───────────────────────────────────┐   S3
       │  GENERATE  BIT  GAIN  TABLE  ON    │
       │  THE  BASIS  OF  FREQUENCY  BAND   │
       │  AND  SIGNAL  POWER                │
       └──────────────────┬────────────────┘
                           │
                           ▼
       ┌───────────────────────────────────┐   S4
       │  CONTROL  SIGNAL  SENT  TO         │
       │  COMMUNICATION  LINE               │
       │  ON  THE  BASIS  OF  BIT  GAIN  TABLE │
       └──────────────────┬────────────────┘
                           │
                           ▼
                    ┌──────────────┐
                    │     End      │
                    └──────────────┘
```

FIG. 9

# FIG. 10

# FIG. 11

```
            ┌─────────────┐
            │   Start     │
            └──────┬──────┘
                   │
                   ▼
   ┌───────────────────────────────┐     S11
   │  SPECIFY  TYPES  OF  PLURALITY │
   │  OF MODEMS  BEING  PRESENT     │
   │  ON ADJACENT  LINE             │
   └───────────────┬───────────────┘
                   │
                   ▼
   ┌───────────────────────────────┐     S12
   │  ACQUIRE FREQUENCY BANDS AND   │
   │  SIGNAL POWERS CORRESPONDING   │
   │  TO TYPES OF MODEMS            │
   └───────────────┬───────────────┘
                   │
                   ▼
   ┌───────────────────────────────┐     S13
   │  SELECT FREQUENCY BAND AND     │
   │  SIGNAL POWER SHARED BY        │
   │  TYPES OF PLURALITY MODEMS     │
   └───────────────┬───────────────┘
                   │
                   ▼
   ┌───────────────────────────────┐     S14
   │  GENERATE BIT GAIN TABLE ON    │
   │  THE BASIS OF FREQUENCY BAND   │
   │  AND SIGNAL POWER              │
   └───────────────┬───────────────┘
                   │
                   ▼
   ┌───────────────────────────────┐     S15
   │  CONTROL SIGNAL SENT TO        │
   │  COMMUNICATION LINE            │
   │  ON THE BASIS OF BIT GAIN TABLE│
   └───────────────┬───────────────┘
                   │
                   ▼
            ┌─────────────┐
            │    End      │
            └─────────────┘
```

# FIG. 12

(a)

SIGNAL (dBm)

a2

a1

FREQUENCY (Hz)  a11~a1n    a21~a2n

NOISE

(b)

SIGNAL (dBm)

b2

b3

FREQUENCY (Hz)  b21~b2n    b31~b3n

NOISE

(c)

SIGNAL (dBm)

a2

b3

a1

FREQUENCY (Hz)  a11~a1n    a21~b2n    b31~b3n

NOISE

EP 1 909 405 B1

# FIG. 13

VDSL

# FIG. 14

```
            ┌──────────────┐
            │    Start     │
            └──────┬───────┘
                   │
                   ▼                              S21
    ┌──────────────────────────────┐
    │    MEASURE NOISE ON           │
    │    ADJACENT LINE              │
    └──────────────┬───────────────┘
                   │
                   ▼                        S22
  Yes          ◇ NOISE? ◇
   ┌──────────────────────────┐
   │               │ No        │
   │               ▼
   │   ┌──────────────────────────────┐   S23
   │   │ DETERMINE THAT TRANSMISSION  │
   │   │ OUTPUT CONTROL IS UNNECESSARY,│
   │   │ AND TRANSMIT SIGNAL BY USING │
   │   │ PREDETERMINED                │
   │   │ SIGNAL POWER VALUE           │
   │   └──────────────┬───────────────┘
   │                  │
   │                  ▼
   │           ┌──────────────┐
   │           │     End      │
   │           └──────────────┘
   │
   ▼                                        S24
┌──────────────────────────────┐
│  PERFORM TRANSMISSION OUTPUT  │
│  CONTROL TO TRANSMIT SIGNAL   │
└──────────────┬───────────────┘
               │
               ▼
        ┌──────────────┐
        │     End      │
        └──────────────┘
```

# FIG. 15

600 — ADSL IN-HOUSE APPARATUS
200 — VDSL IN-HOUSE APPARATUS
300
400
800
500 — ADSL IN-STATION APPARATUS
700 — OLT
ONU / VDSL STATION-SIDE APPARATUS
REMOTE COMPOSITE APPARATUS:100

**EP 1 909 405 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- JP 2006270883 A
- EP 1672809 A
- JP 2006014040 A
- JP 2006115326 A